**Europäisches Patentamt**

**European Patent Office**

**Office européen des brevets**

(19)

(11) Numéro de publication : **0 473 513 A1**

## (12) DEMANDE DE BREVET EUROPEEN

(21) Numéro de dépôt : **91402326.2**

(22) Date de dépôt : **28.08.91**

(51) Int. Cl.⁵ : **B61C 17/04,** B60H 1/00, F24F 3/14, B01D 53/26

(30) Priorité : **28.08.90 FR 9010711**

(43) Date de publication de la demande :
**04.03.92 Bulletin 92/10**

(84) Etats contractants désignés :
**AT BE CH DE DK ES FR GB IT LI NL SE**

(71) Demandeur : **GEC ALSTHOM SA**
**38, avenue Kléber**
**F-75116 Paris (FR)**

(72) Inventeur : **Chappet, Philippe**
**6, Domaine du Bois Joli**
**F-90200 Cravanche (FR)**

(74) Mandataire : **Weinmiller, Jürgen et al**
**Lennéstrasse 9 Postfach 24**
**W-8133 Feldafing (DE)**

(54) **Ensemble de climatisation et de production d'air comprimé pour engin de traction ferroviaire.**

(57)   L'invention concerne un ensemble de climatisation et de production d'air comprimé pour engin de traction ferroviaire comprenant un groupe de climatisation de la cabine de conduite du train et un compresseur d'air (6) pour le circuit de freinage, le groupe de climatisation utilisant un fluide frigorigène en circuit fermé, l'air comprimé pour le circuit de freinage étant séché par un dispositif de séchage, caractérisé en ce que le circuit de séchage comprend au moins un évaporateur (9) qui produit du froid à partir d'une dérivation (34, 37) du fluide frigorigène du groupe de climatisation, l'air comprimé à sécher circulant dans le tube réfrigérant (33) de l'évaporateur (9) et dans un filtre (11) destiné à recueillir l'eau de condensation produite par la circulation de l'air comprimé dans le tube réfrigérant (33).

EP 0 473 513 A1

# FIG.1

L'invention concerne un ensemble de climatisation et de production d'air comprimé pour engin de traction ferroviaire, en particulier pour train à grande vitesse.

Certaines motrices de train, en particulier les trains à grande vitesse type TGV, sont équipées d'un groupe de climatisation de la cabine de conduite. Ceci se justifie par les vitesses élevées de ces trains qui nécessitent un plus grand confort pour le conducteur.

Dans le cas du TGV, une rame se compose de huit voitures encadrées par deux motrices identiques. Il y a donc deux groupes de climatisation par rame mais un seul est utilisé puisqu'il n'y a qu'une cabine qui est occupée. Le groupe de climatisation peut aussi être utilisé pour la préréfrigération de la cabine de conduite avant le départ du train. Ceci se produit lorsque la température extérieure est élevée.

Les groupes de climatisation sont en fait surdimensionnés pour pouvoir effectuer l'opération de préréfrigération qui consomme beaucoup d'énergie. On dispose donc par rame de deux groupes de climatisation surdimensionnés dont un seul est utilisé.

Un compresseur d'air, pour le freinage électropneumatique et l'alimentation des auxiliaires (suspension pneumatique, ouverture et fermeture des portes, etc.), est également prévu dans chaque motrice. Le compresseur aspire l'air ambiant qui est filtré. Un dispositif de séchage d'air doit être prévu pour éliminer l'humidité de l'air sous pression, cette humidité étant nuisible au bon fonctionnement des utilisateurs.

Le séchage de l'air comprimé est réalisé par des sécheurs d'air à adsorption, méthode qui consiste à faire circuler de l'air dans une masse de billes d'alumine. L'alumine se saturant très vite, chaque sécheur comporte deux réserves d'alumine. L'une d'elle sert à sécher l'air comprimé tandis que l'autre est en cours de régénération grâce à de l'air sec provenant de l'autre circuit. Un mécanisme assez compliqué assure le basculement du circuit de séchage sur une réserve d'alumine régénérée quand l'autre réserve est saturée. Au bout d'un certain temps d'utilisation, la régénération ne s'effectue plus correctement et il est nécessaire de renouveler les réserves d'alumine.

Ce sécheur d'air à réserves d'alumine occupe un volume important et pèse lourd ce qui est un inconvénient certain, surtout que la consommation d'air est variable et correspond en moyenne au quart du temps mis à faire un trajet déterminé. En outre, ce sécheur d'air équipe chaque motrice.

Pour pallier ces inconvénients, on propose selon la présente invention un ensemble associant le groupe de climatisation de la cabine de conduite et le compresseur d'air de manière à faire circuler l'air à sécher dans un tube réfrigérant alimenté par le groupe de climatisation. On abaisse alors la température de l'air comprimé en-dessous de son point de rosée et on provoque la condensation de la vapeur qu'il contient. L'invention permet donc une simplification du matériel et de son entretien.

L'invention a donc pour objet un ensemble de climatisation et de production d'air comprimé pour engin de traction ferroviaire comprenant un groupe de climatisation de la cabine de conduite du train et un compresseur d'air pour le circuit de freinage et éventuellement les auxiliaires, le groupe de climatisation utilisant un fluide frigorigène en circuit fermé, l'air comprimé pour le circuit de freinage et éventuellement les auxiliaires étant séché par un dispositif de séchage, caractérisé en ce que le circuit de séchage comprend au moins un évaporateur qui produit du froid à partir d'une dérivation du fluide frigorigène du groupe de climatisation, l'air comprimé à sécher circulant dans le tube réfrigérant de l'évaporateur et dans un filtre destiné à recueillir l'eau de condensation produite par la circulation de l'air comprimé dans le tube réfrigérant.

L'invention sera mieux comprise et d'autres avantages apparaîtront à la lecture de la description qui va suivre, donnée à titre non limitatif, accompagnée des dessins annexés parmi lesquels :

- la figure 1 représente un ensemble de climatisation et de production d'air comprimé selon l'invention,
- la figure 2 représente une variante de l'ensemble selon l'invention.

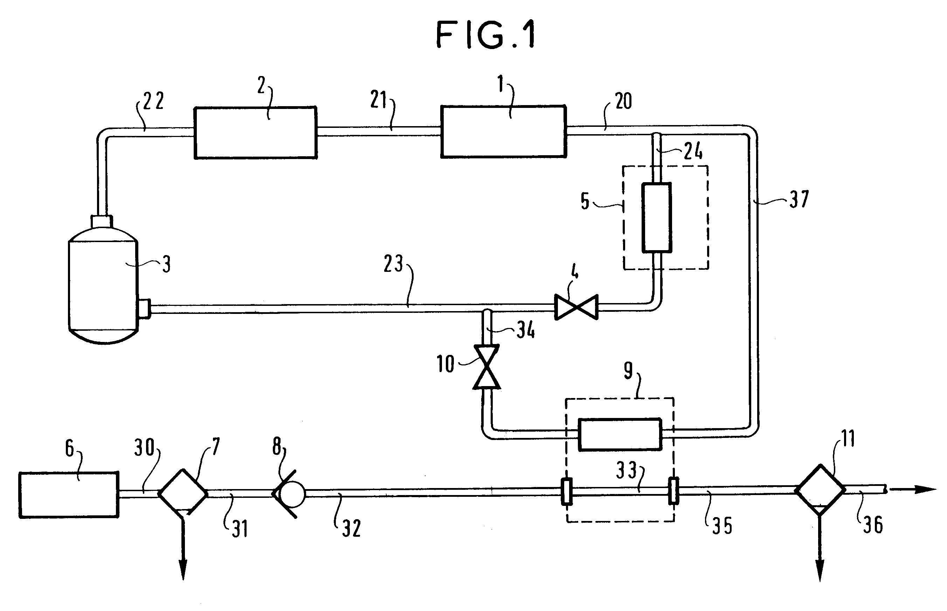

Dans la figure 1 on a représenté de manière symbolique les différents constituants de l'ensemble de climatisation et de production d'air comprimé parce que ces constituants en eux-mêmes ne posent pas de problème à l'homme du métier. Ainsi le groupe de climatisation de la cabine de conduite est classique dans son circuit fermé. Il comprend un compresseur 1 qui aspire le gaz frigorigène (par exemple celui connu sous le nom déposé "fréon") par la conduite 20 et le refoule à une pression plus élevée par la conduite 21 vers le condenseur 2 qui provoque une baisse de la température du fluide frigorigène. Le fluide passe alors, sous forme liquide, dans le réservoir (ou bouteille) 3 grâce à la conduite 22. Un détendeur 4 placé sur la conduite de sortie 23 règle le débit du fluide frigorigène vers le tube réfrigérant de l'évaporateur 5 qui assure la production de froid par évaporation du liquide frigorigène en gaz lequel est à nouveau aspiré, grâce aux conduites 24 et 20, par le compresseur 1.

Pour le circuit de production d'air comprimé, un compresseur à vis 6 aspire l'air ambiant et le comprime. L'air comprimé passe, grâce à la conduite 30, dans un filtre 7 qui élimine les impuretés de l'air (poussières, eau, huile). Il peut s'agir d'un filtre de 0,3 μm. La conduite 31 amène l'air comprimé jusqu'au clapet anti-retour 8. L'air sortant du clapet anti-retour par la conduite 32 passe dans le tube réfrigérant 33 de l'évaporateur 9 qui produit du froid par la détente du "fréon". Ce "fréon" liquide est prélevé dans le circuit du groupe de climatisation par la conduite 34 aboutissant dans la conduite 23 entre le réservoir 3 et le détendeur 4 et dans laquelle est inséré le détendeur 10. Ce détendeur 10 a pour rôle d'amener le liquide prélevé à une pression plus faible que le détendeur 4. En effet, l'évaporateur 9 doit refroidir plus intensément l'air comprimé que l'air de la cabine de conduite. Un filtre 11 est placé à la sortie de l'évaporateur 9. Il reçoit l'air refroidi par la conduite de sortie 35 de l'évaporateur. Il permet d'éliminer l'eau recueillie par condensation. Une conduite 36 permet de recueillir, en sortie de filtre, de l'air comprimé et séché utilisable pour le circuit ce freinage.

Le "fréon" utilisé par l'évaporateur 9 est réintroduit dans le circuit de climatisation, vers la conduite d'aspiration 20, par la conduite 37.

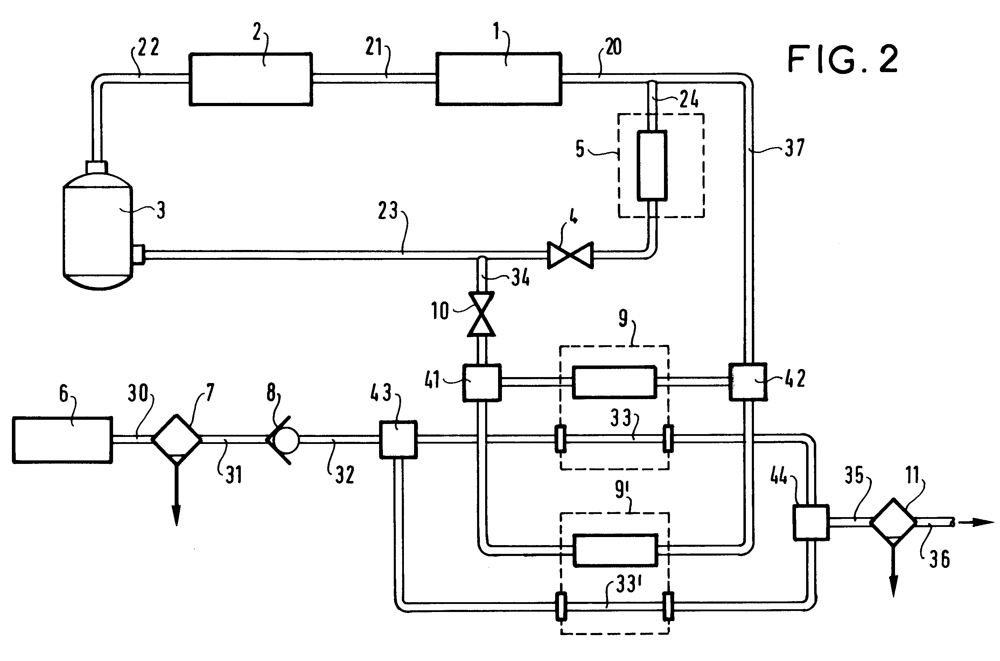

Selon la variante représentée à la figure 2, on a doublé le circuit de refroidissement de l'air séché. Pour cela, un second évaporateur 9′ a été placé en parallèle sur l'évaporateur 9. Ce doublage du circuit de refroidissement peut s'avérer nécessaire au cas où l'eau de condensation formerait de la glace à l'intérieur de l'évaporateur, glace qu'il faudrait bien éliminer. Dans ce cas il faut aussi doubler les conduites d'arrivée et de sortie d'air pour les connecter aux tubes réfrigérants 33 et 33′ correspondant respectivement aux évaporateurs 9 et 9′.

La commutation entre les évaporateurs 9 et 9′ peut se faire par des électrovannes trois voies 41 et 42. D'autres électrovannes trois voies 43 et 44 permettent à l'air comprimé de circuler dans l'un des tubes réfrigérants 33 et 33′ en fonction de l'évaporateur en usage. La commutation peut se faire lors d'un arrêt. Elle peut aussi se faire de manière automatique car il est possible de connaître avec suffisamment de précision le temps mis par un évaporateur pour se givrer. Dans ce cas, il est avantageux de commuter d'abord les évaporateurs 9 et 9′, puis après un certain délai le circuit d'air comprimé. Ainsi pendant qu'un évaporateur est en phase de préparation, l'air comprimé circule encore un moment dans le tube réfrigérant de l'autre évaporateur, ce tube réfrigérant étant encore suffisamment froid (à cause de la glace environnante) pour condenser l'humidité de l'air comprimé.

Dans le cas de la variante représentée à la figure 2, au lieu de disposer d'un tel filtre 11 en sortie, on peut préférer utiliser deux filtres situés directement en sortie des tubes réfrigérants 33 et 33′, donc avant l'électrovanne 44.

L'invention présente l'avantage d'être facilement réalisable par un spécialiste du domaine concerné. Le groupe de climatisation en tant que tel est déjà connu. Le dispositif selon l'invention n'exige que l'adjonction d'éléments que l'on trouve dans le commerce : électrovannes, détendeurs, évaporateurs, filtres, conduites.

## Revendications

**1-** Ensemble de climatisation et de production d'air comprimé pour engin de traction ferroviaire comprenant un groupe de climatisation de la cabine de conduite du train et un compresseur d'air (6) pour le circuit de freinage et éventuellement les auxiliaires, le groupe de climatisation utilisant un fluide frigorigène en circuit fermé, l'air comprimé pour le circuit de freinage et éventuellement les auxiliaires étant séché par un dispositif de séchage, caractérisé en ce que le circuit de séchage comprend au moins un évaporateur (9) qui produit du froid à partir d'une dérivation (34, 37) du fluide frigorigène du groupe de climatisation, l'air comprimé à sécher circulant dans le tube réfrigérant (33) de l'évaporateur (9) et dans un filtre (11) destiné à recueillir l'eau de condensation produite par la circulation de l'air comprimé dans le tube réfrigérant (33).

**2-** Ensemble selon la revendication 1, caractérisé en ce que ladite dérivation de fluide frigorigène est munie d'un détendeur (10).

**3-** Ensemble selon l'une des revendications 1 ou 2, caractérisé en ce que le circuit de séchage comprend deux évaporateurs (9, 9′) placés en parallèle et destinés à sécher en alternance l'air comprimé.

**4-** Ensemble selon la revendication 3, caractérisé en ce que des électrovannes trois voies de circulation de fluide frigorigène (41, 42) et des électrovannes trois voies de circulation d'air comprimé (43, 44) assurent l'alternance du séchage.

**5-** Ensemble selon la revendication 4, caractérisé en ce que l'alternance de séchage est obtenu en actionnant d'abord les électrovannes de circulation de fluide frigorigène (41, 42) puis, après un temps déterminé, les électrovannes de circulation d'air comprimé (43, 44).

FIG.1

FIG. 2

EP 0 473 513 A1

Office européen
des brevets

**RAPPORT DE RECHERCHE EUROPEENNE**

Numero de la demande

EP    91 40 2326

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-3 848 428 (J. F. RIETER)<br>* revendication 1; figures 1-3 *<br>--- | 1 | B61C17/04<br>B60H1/00<br>F24F3/14<br>B01D53/26 |
| A | ENERGIE FLUIDE<br>vol. 22, no. 1, Janvier 1983, PARIS FR<br>pages 34 - 39; 'SECHEUR PAR REFRIGERATION: LA TECHNOLOGIE Dα UN TRAITEMENT SUR MESURE'<br>* page 38, colonne de droite, alinéa 2 - page 39, colonne de gauche, ligne 23 *<br>--- | 1 | |
| A | DE-A-3 638 875 (WEISS KLIMATECHNIK GMBH)<br>* colonne 2, ligne 55 - colonne 4, ligne 28; figure 1 *<br><br>----- | 1 | |

**DOMAINES TECHNIQUES RECHERCHES (Int. Cl.5 )**

B61C
B60H
B61D
F24F
B01D
F25B
B60T

Le présent rapport a été établi pour toutes les revendications

| Lieu de la recherche | Date d'achèvement de la recherche | Examinateur |
|---|---|---|
| LA HAYE | 07 NOVEMBRE 1991 | CHLOSTA P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                                    
& : membre de la même famille, document correspondant

EPO FORM 1503 03.82 (P0402)